(19) Europäisches Patentamt
European Patent Office
Office européen des brevets

(11) **EP 4 535 680 A1**

(12) **EUROPEAN PATENT APPLICATION**

(43) Date of publication:
**09.04.2025 Bulletin 2025/15**

(21) Application number: **23306729.7**

(22) Date of filing: **06.10.2023**

(51) International Patent Classification (IPC):
***H04B 7/0452*** (2017.01)   ***H04L 5/00*** (2006.01)
***H04L 25/02*** (2006.01)

(52) Cooperative Patent Classification (CPC):
**H04L 25/0226; H04B 7/0452; H04L 25/0204;**
**H04L 25/0228;** H04L 5/005

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Institut Mines Telecom**
**91120 Palaiseau (FR)**

(72) Inventors:
• **HAMDAR, Fatima**
**29280 Plouzané (FR)**
• **NADAL, Jérémy**
**29200 BREST (FR)**
• **ABDEL NOUR, Charbel**
**29200 BREST (FR)**
• **BAGHDADI, Amer**
**29200 BREST (FR)**

(74) Representative: **Atout PI Laplace**
**Immeuble Up On**
**25 Boulevard Romain Rolland**
**CS 40072**
**75685 Paris Cedex 14 (FR)**

(54) **SYSTEM AND METHOD FOR CHANNEL ESTIMATION IN MULTICARRIER MODULATION BASED COMMUNICATIONS**

(57)    A Channel Estimation mechanism in an FBMC or other multicarrier modulation based communication channel offering a plurality of sub-carriers, comprises transmitting pilot symbols based on the Zadoff Chu or other Constant Amplitude Zero Auto-Correlation sequence on non-adjacent (for example alternating) sub-channels. In multi-user scenarios, pilot symbols from each user device are transmitted on the same selected sub-channels, but subjected to a circular shift. These mechanisms obviating the need for Guard bands between each user devices pilot symbols, and the need for the including of a noise correlation matrix.

**FIG. 3**

**Description**

FIELD OF THE INVENTION

The invention pertains to channel estimation in multicarrier modulation based communications such as FBMC/OQAM.

BACKGROUND PRIOR ART

Accurate Channel Estimation (CE) plays a crucial role in harnessing the full potential of mMIMO such as improved Spectral Efficiency (SE) and resilience against challenging channel conditions. Unlike Orthogonal Frequency Division Multiplexing (OFDM), FBMC/OQAM shows only real field
orthogonality. Therefore, corresponding signals suffer from intrinsic interference, penalizing its reliability and motivating the use of alternative Channel Estimation techniques. Furthermore, typical Channel Estimation methods for mMIMO-FBMC systems require large training overheads, particularly for a large number of users or for flat-fading channel conditions over each subcarrier band.
The Channel Estimation process in FBMC/OQAM systems differs from that in traditional OFDM systems due to the loss of complex orthogonality. The majority of current Channel Estimation methods rely on the frequency domain model with the Interference Approximation Method (IAM) approach and assume that the symbol period is significantly greater than the maximum channel delay spread as discussed in the article by C. Lele, P. Siohan, R. Legouable, and J.-P. Javaudin, entitled "Preamble-based channel estimation techniques for OFDM/OQAM over the powerline," in 2007 IEEE International Symposium on Power Line Communications and Its Applications, 2007, pp. 59-64 (LELE ET AL). Alternative methods include time domain models where the frequency domain pilots are utilized to estimate the time domain Channel Impulse Response (CIR)s with no constraint on the length of the symbol interval for example as discussed in the article by D. Kong, D. Qu, and T. Jiang, entitled "Time domain channel estimation for OQAM-OFDM systems: Algorithms and performance bounds," published in IEEE Transactions on Signal Processing, vol. 62, no. 2, pp. 322-330, 2014.(KONG ET AL), the article by P. Singh and K. Vasudevan, entitled "Time domain channel estimation for MIMO-FBMC/OQAM systems," published in Wireless Personal Communications, vol. 108, 10 2019.(SINGH ET AL) or the article by M. Caus and A. I. Perez-Neira, entitled "Transmitter-receiver designs for highly frequency selective channels in MIMO FBMC systems," published in IEEE Transactions on Signal Processing, vol. 60, no. 12, pp. 6519-6532, 2012.(CAUS ET AL).
The underpinnings of these two basic approaches and their inherent drawbacks are discussed in the following sections.

**Frequency domain models**

Considering a time-invariant channel, the received signal can be expressed as follows:

$$r(k) = h(k) * s(k) + \eta(k) \qquad (1)$$

where $h$ is the CIR, $\eta(k)$ is the Additive White Gaussian Noise (AWGN) term, and s is the transmitted signal.
By assuming that the preamble pilots have time index $n = 0$, and are not subject to interference by the data symbols due to the insertion of enough GBs in-between, the received pilot on the $mth$ subcarrier is obtained by the preceding equation.

$$\hat{a}_{m,0} \approx H_{m,0}\big(a_{m,0} + a_{m,0}^c\big) + \eta_{m,0} \qquad (2)$$

where $a_{m,0}^c$ represents the intrinsic interference and is expressed as follows:

$$a_{m,0}^c = \sum_{i=0, i \neq m}^{M-1} \zeta_{i,0}^{m,0} a_{i,0}$$

$$\zeta_{m,n}^{p,q} = \sum_{k=-\infty}^{\infty} g_{m,n}[k] g_{p,q}^*[k]$$

$$\qquad\qquad (3)$$

$$H_{m,0} = \sum_{0}^{L} h[k] e^{-2j\pi mk/M}$$

Where this last equation represents the complex Channel Frequency Response (CFR) at the $mth$ subcarrier, $L$ is the total number of paths, $g$ the impulse response of the Prototype Filter (PF), and $\eta m,n$ is the demodulated noise at the ($m$, $n$)-th position given as

$$\eta_{m,n} = \sum_{k=-\infty}^{\infty} \eta[k] g\left[k - n\frac{M}{2}\right] e^{-\frac{2j\pi mk}{M}} \phi_n^*(m) \qquad\qquad (4)$$

Considering the frequency domain model in equation (2), Channel Estimation based on the Interference Approximation Method is given by

$$\widehat{H}_{m,0} = \frac{\hat{a}_{m,0}}{a_{m,0} + a_{m,0}^c} \qquad\qquad (5)$$

as set out in LELE ET AL. Indeed, if the channel delay spread is considerably smaller than the symbol interval, the Interference Approximation Method exhibits favorable Channel Estimation performance. Nevertheless, if the channel delay spread is not adequately small compared to the symbol interval, the use of the Interference Approximation Method would lead to significant deterioration in the accuracy of the Channel Estimation.

The Interference Approximation Method approach is improved in the article by J. Du and S. Signell, entitled "Novel preamble-based channel estimation for OFDM/OQAM systems," published in 2009 IEEE international conference on communications. IEEE, 2009, pp. 1-6. by considering the transmission of purely real and imaginary pilot values. This enhancement is particularly interesting for short PFs as their short duration allows for complete separation of the pilots from the data. A study by C. Lele, P. Siohan, and R. Legouable, entitled "2dB better than CP-OFDM with OFDM/OQAM for preamble-based channel estimation," published in 2008 IEEE International Conference on Communications. IEEE, 2008, pp. 1302-1306. shows that when an Interference Approximation Method -based Channel Estimation technique is employed, FBMC/OQAM with a short PF performs better than OFDM by 2.3 dB and outperforms FBMC/OQAM with a long PF by 0.3 dB. Similar findings are reported in the article by C. Lélé, J.-P. Javaudin, R. Legouable, A. Skrzypczak, and P. Siohan, entitled" Channel estimation methods for preamble-based OFDM/OQAM modulations, "published in European Transactions on Telecommunications, vol. 19, no. 7, pp. 741-750, 2008. However, the Interference Approximation Method -based techniques suffer from high Peak-to-Average Power Ratio (PAPR), which makes it vulnerable to non-linear distortions caused by the High Power Amplifier (HPA) as discussed in the article by E. Kofidis, D. Katselis, A. Rontogiannis, and S. Theodoridis, entitled "Preamble-based channel estimation in OFDM/OQAM systems: A review" published in Signal processing, vol. 93, no. 7, pp. 2038- 2054, 2013.

**Time domain models**

As an alternative approach to the frequency domain models, time domain models for Channel Estimation have been investigated.

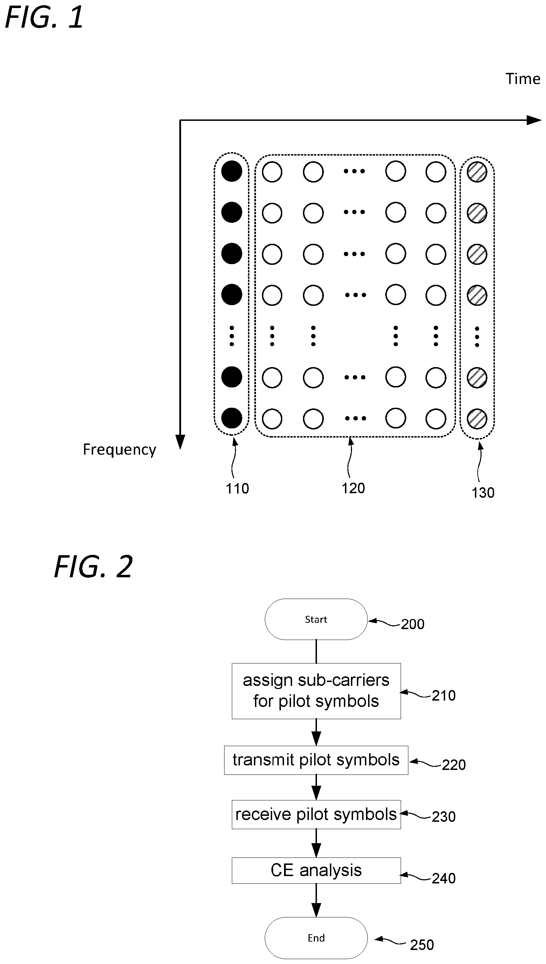

Figure 1 presents schematically the basis for Time Domain channel estimation for FBMC as known in the prior art.

As shown, a transmitted frame is represented as a matrix of symbols, with respective symbols being distinguished by the frequency at which they are transmitted on one axis, and the time sequence of successive transmissions on the other axis.

Pilot symbols transmitted for the purpose of performing Channel Estimation as discussed hereon are represented as black filled circles, Data symbols belonging to the channel payload are represented as hatched circles, and blank circles represent the transmission of zero symbols.

A such, the first set of transmissions 110 in time sequence are used for the transmission of pilot symbol at every frequency. There follows a series of transmissions 120 in time sequence at which zero value symbols are transmitted at every frequency. Finally, the transmission of data symbols 130 begins at every frequency.

The demodulated pilot symbol at the subcarrier index m and time symbol $n$ can be written as

$$\hat{a}_{m,n} = \sum_{k=-\infty}^{\infty} r[k] g\left[k - n\frac{M}{2}\right] e^{-\frac{2j\pi mk}{M}} \phi_n^*(m) \tag{6}$$

According to KONG ET AL, the received pilot vector $Pr$ can be expressed as follows:

$$P_r = Ah + \eta \tag{7}$$

where $h = [h(0), ..., h(L-1)]$ is a vector containing the channel taps, $\eta = [\eta 0,n, ..., \eta M\text{-}1,n]$ is the noise vector, and $A$ is an $M \times L$ matrix with its entry on the *mth* row and *lth* column is defined as

$$A(m,l) = \sum_{k=-\infty}^{\infty} \sum_{m'=0}^{M-1} \sum_{n'=-\infty}^{\infty} a_{m',n'} g\left[k - l - n'\frac{M}{2}\right] \tag{8}$$

$$\times g\left[k - n\frac{M}{2}\right] e^{j2\pi(m'-m)k/M} \times e^{2\pi(m'+m-n)/2} e^{-j2\pi m'l/M}$$

Added to the filtering operation, the orthogonality of FBMC/OQAM in the real domain leads to a correlation of the noise vector elements in (7).

Therefore, the conventional Least Square Channel Estimation method used for OFDM systems as presented by A. S. Ahmed, M. M. Hamdi, M. S. Abood, A. M. Khaleel, M. Fathy, and S. H. Khaleefah, in the article entitled "Channel estimation using LS and MMSE channel estimation techniques for MIMO-OFDM systems" published in 2022 International Congress on Human-Computer Interaction, Optimization and Robotic Applications (HORA), 2022, pp. 1-6 [AHMED ET AL]. cannot be readily applied KONG ET AL. To solve this issue, the authors in KONG ET AL included the channel noise correlation matrix **C** in the Least Square method as follows:

$$\hat{h} = (A^H C^{-1} A)^{-1} A^H C^{-1} P_r \tag{9}$$

Along with

$$C = \begin{pmatrix} \sigma^2 & \sigma^2 \zeta_{0,0}^{1,0} & \cdots & \sigma^2 \zeta_{0,0}^{-2,0} & \sigma^2 \zeta_{0,0}^{-1,0} \\ \sigma^2 \zeta_{1,0}^{0,0} & \sigma^2 & \cdots & \sigma^2 \zeta_{1,0}^{-2,0} & \sigma^2 \zeta_{1,0}^{-1,0} \\ \vdots & \vdots & \ddots & \vdots & \vdots \\ \sigma^2 \zeta_{-2,0}^{0,0} & \sigma^2 \zeta_{-2,0}^{1,0} & \cdots & \sigma^2 & \sigma^2 \zeta_{-2,0}^{-1,0} \\ \sigma^2 \zeta_{-1,0}^{0,0} & \sigma^2 \zeta_{-1,0}^{1,0} & \cdots & \sigma^2 \zeta_{1,0}^{-2,0} & \sigma^2 \end{pmatrix} \tag{10}$$

The authors of KONG ET AL have shown that applying the approach of AHMED ET AL outperforms the frequency domain Interference Approximation Method. However, extra Guard Bands are necessary to separate the pilot signals of different users in a Multi User Channel Estimation scenario, hence penalizing SE.

To avoid Guard Band insertion between the pilots of different users, the authors of the article H. Hosseiny, A. Farhang, and B. Farhang-Boroujeny, entitled "Spectrally efficient pilot structure and channel estimation for multiuser FBMC systems," published in ICC 2020 - 2020 IEEE International Conference on Communications (ICC), 2020, pp. 1-7. proposed an alternative PS that relies on interleaving user pilots in time and frequency. Following this method, each user employs $Np$ instead of $M$ pilots, where $Np$ corresponds to the channel length of a user and three FBMC guard symbols were inserted between the pilots and data symbols to shield the pilots from interference. While spectrally efficient thanks to the absence of guard symbols, this method leads to intrinsic interference due to the experienced correlation between the estimates of different user channels. To avoid a performance penalty, it is necessary to explicitly consider intrinsic interference when applying AHMED ET AL during the estimation process. However, this leads to a higher computational complexity. Moreover, the authors of this article simply considered an exponentially decaying channel in their simulations. Therefore, the performance may differ for more realistic channels.

It is desirable to develop a Channel Estimation approach for multicarrier modulation based / communications addressing at least some of these drawbacks.

## SUMMARY OF THE INVENTION

In accordance with the present invention in a first aspect there is provided a method of performing channel characteristic estimation for one or more users in a multicarrier modulation based communication channel offering a plurality of sub-carriers, comprising assigning a plurality of sub-carriers for the transmission of complex pilot symbols for each user, where no two adjacent sub-carriers are so assigned, transmitting the complex pilot symbols from each user on each assigned sub-carrier, receiving the pilot symbols on each assigned sub-carrier, and performing a frequency domain based analysis of the communication channel on the basis of the received pilot symbols to obtain an estimated channel.

In a development of the first aspect, the frequency domain based analysis of the communication channel on the basis of the received pilot symbols comprises a Linear Channel estimator based analysis.

In a development of the first aspect, the pilot symbols reflect a Constant Amplitude Zero Auto-Correlation sequence.

In a development of the first aspect, the pilot symbols for each user in sequence on each sub-channel are subjected to a circular shift of a predetermined increment with respect to the preceding user in the sequence such that pilot symbols from each user on each assigned sub-carrier are interleaved in both time and frequency domains.

In a development of the first aspect, the predetermined increment ($i$) is at least equal to

$$i = (\mathrm{mod}_{L_{ZC}}(m + \frac{L_{ZC}}{U}))$$

Where L is the sequence length, , and U is the number of users, and m is the index of the respective sub-carrier.

In a development of the first aspect, the number of successive sub-carriers not assigned to transmitting pilot symbols from each user after each sub-carriers assigned to transmitting pilot symbols from each user is determined as a function of the channel fading characteristics of all users.

In a development of the first aspect, the method comprises a further step of filtering the pilot symbols by a prototype filter with an overlapping factor of one.

In accordance with the present invention in a second aspect there is provided method of supporting channel characteristic estimation at a user device for a user in a multicarrier modulation based communication channel offering a plurality of sub-carriers, the method comprising receiving a carrier assignment assigning a plurality of the sub-carriers for the transmission of a pilot data structure for the user, where no two adjacent sub-carriers are so assigned, transmitting pilot symbols on each assigned sub-carrier, for a frequency domain based analysis of the communication channel on the basis of the received pilot symbols.

In accordance with the present invention in a third aspect there is provided method of performing channel characteristic estimation at a base station for one or more users in a multicarrier modulation based communication channel offering a plurality of sub-carriers, the method comprising assigning a plurality of the sub-carriers for the transmission of a pilot data structure for each user, where no two adjacent sub-carriers are so assigned, transmitting the carrier assignments to each user, receiving pilot symbols from each user on each assigned sub-carrier on each assigned sub-carrier, and performing a frequency domain based analysis of the communication channel on the basis of the received pilot symbols.

In accordance with the present invention in a fourth aspect there is provided a linear modulation based communications system adapted to performing channel characteristic estimation for one or more users in a multicarrier modulation based communication channel offering a plurality of sub-carriers, the system being adapted to assign a plurality of the sub-carriers for the transmission of pilot data symbols for each user, where no two adjacent sub-carriers are so assigned, transmitting pilot symbols from each user on each assigned sub-carrier, to receive the pilot symbols on each assigned sub-carrier, and to perform a frequency domain based analysis of the communication channel on the basis of the received pilot symbols.

In accordance with the present invention in a fifth aspect there is provided a user device supporting channel characteristic estimation in a multicarrier modulation based communication system offering a plurality of sub-carriers, the user device adapted to receive a carrier assignment assigning a plurality of sub-carriers for the transmission of pilot symbols, where no two adjacent sub-carriers are so assigned, transmitting pilot symbols on each assigned sub-carrier, for a frequency domain based analysis of the communication channel on the basis of the received pilot symbols.

In accordance with the present invention in a sixth aspect there is provided a base station for performing channel characteristic estimation for one or more users in a multicarrier modulation based communication system offering a plurality of sub-carriers, the base station adapted to assigning a plurality of the sub-carriers for the transmission of pilot symbols, where no two adjacent sub-carriers are so assigned, to transmit the carrier assignments to each user, to receive pilot symbols from each user on each assigned sub-carrier on each assigned sub-carrier, and to perform a frequency domain based analysis of the communication channel on the basis of the received pilot symbols.

In a development of any of the fourth, fifth or sixth aspects, the prototype filter of the transmitter or the receiver has an overlapping factor of one.

In accordance with the present invention in a seventh aspect there is provided a computer program comprising instructions which, when the program is executed by a computer, cause the computer to carry out the method of any of the first, second or third aspects.

In accordance with the present invention in a seventh aspect there is provided a computer-readable medium comprising instructions which, when executed by a computer, cause the computer to carry out the method of any of the first, second or third aspects.

BRIEF DESCRIPTION OF THE DRAWINGS

The invention will be better understood and its various features and advantages will emerge from the following description of a number of exemplary embodiments provided for illustration purposes only and its appended figures in which:

Figure 1    presents schematically the basis for Time Domain channel estimation for FBMC as known in the prior art;
Figure 2    presents the steps of a method in accordance with an embodiment;
Figure 3    presents schematically the basis for Time Domain channel estimation for FBMC in accordance with a single user embodiment;
Figure 4a   illustrates the basic principle of the assignment of pilot symbols to sub-carriers in multi-user environments in accordance with embodiments;
Figure 4b   presents schematically the basis for Time Domain channel estimation for FBMC in a multi user scenario in accordance with a multi-user embodiment; Figure 5 presents a method in accordance with an embodiment, as executed at a user device;
Figure 6    presents a method in accordance with an embodiment, as executed at a base station;
Figure 7    shows a first transmitter implementation;
Figure 8    shows an alternative transmitter implementation;
Figure 9    presents a computer suitable for carrying out a method according to an embodiment; and
Figure 10   presents a base station 910 incorporating computer suitable for carrying out a method according to an embodiment.

**Detailed description**

To address these issues, a preamble-based Pilot Structure (PS) is proposed that reduces the training overhead by interleaving user pilots in time and frequency while re-introducing the possibility of applying conventional OFDM Channel Estimation techniques, particularly the Least Squares (LS) method in the context of Single-User (SU) and Multi-User (MU) scenarios. Performed simulations over the 5G QuaDRiga channel show that the proposed PS improves Spectral Efficiency while delivering the best performance in both preamble-based MU-mMIMO and SU systems. Furthermore, the proposed method significantly improves Spectral Efficiency compared to the available solutions in the literature that require a large number of Guard Band (GB)s for separating the pilots of different users, while enabling the usage of conventional Channel Estimation techniques for OFDM.

Figure 2 presents the steps of a method in accordance with an embodiment.

In particular, there is provided a method of performing channel characteristic estimation for one or more users in a multicarrier modulation based communication channel offering a plurality of sub-carriers. Embodiments extend to any multi-carrier system, such as for example FBMC/OQAM waveform, or OFDM, in which case the out-of-band power leakage is reduced which solves one of the issues of channel estimation for OFDM systems.

The method starts at step 200 before proceeding to step 210 at which a plurality of sub-carriers are assigned for the transmission of pilot symbols for each user, where no two adjacent sub-carriers are so assigned. It may be noted that the assignment may be fixed. The pilot symbols may for example reflect a Constant Amplitude Zero Auto-Correlation sequence such as the Zadoff Chu Sequence. Although any such sequence may be used, the Zadoff Chu Sequence is advantageous in offering a low peak to average power ratio (PAPR).

The method then proceeds to step 220 of transmitting pilot symbols from each user on each assigned sub-carrier, and then receiving pilot symbols on each assigned sub-carrier at step 230. A frequency domain based analysis of the communication channel is then performed on the basis of the received pilot symbols at step 240 to obtain an estimated channel, before terminating at step 250.

The frequency domain based analysis of the communication channel on the basis of the received pilot symbols may comprise for example a Linear Channel estimator based analysis such as a Least Squares or Minimum Mean Square Error analysis.

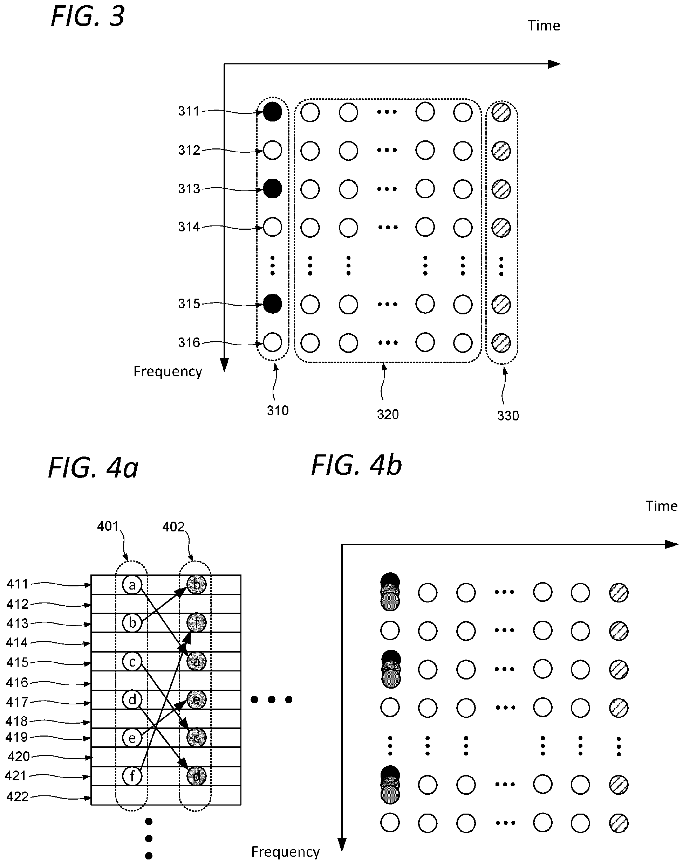

Figure 3 presents schematically the basis for Time Domain channel estimation for FBMC as in accordance with an embodiment.

As stated above, at step 210 a plurality of sub-carriers are assigned for the transmission of pilot symbols for each user (in the present embodiment, a single user), where no two adjacent sub-carriers are so assigned.

This is illustrated in figure 3 which may be compared to the prior art situation of figure 1.

As shown, a transmitted frame is represented as a matrix of symbols, with respective symbols being distinguished by the frequency at which they are transmitted on one axis, and the time sequence of successive transmissions on the other axis.

Pilot symbols transmitted for the purpose of performing Channel Estimation as discussed hereon are represented as black filled circles, Data symbols belonging to the channel payload are represented as hatched circles, and blank circles represent the transmission of zero symbols.

As such, the first set of transmissions in time sequence are used for the transmission of pilot symbols at selected frequencies. Specifically, sub-bands 311, 313 and 315 are selected for the transmission of pilot symbols, whilst sub-bands 312, 314 and 316 transmit zero value. There follows a series of transmissions 320 in time sequence at which zero value symbols are transmitted at every frequency. Finally, the transmission of data symbols 330 begins at every frequency, in the same way as described with respect to figure 1. For filtered multi-carrier waveforms there is a set of ZEROs to be inserted but as discussed herein, contrary to prior art approaches a short Prototype Filter may be used in certain embodiments, such that only one Guard Band symbol need be inserted.

The underlying analysis supporting the operability of the method of figure 2 will now be developed.

The Zadoff-Chu (ZC) sequence, one of the pilot sequences used in the 5G NR wireless system and described in the article by D. Chu entitled "Polyphase codes with good periodic correlation properties (corresp.)," IEEE Transactions on Information Theory, vol. 18, no. 4, pp. 531-532, 1972. has a constant amplitude zero autocorrelation (CAZAC) property that is preserved even when it is processed by an IFFT/FFT since the output samples remain a Zadoff-Chu sequence. Moreover, the low peak to average power ratio makes this an attractive choice for Channel Estimation. The following discussion will take the Zadoff-Chu sequence as the selected constant Amplitude Zero Auto-Correlation sequence.

Meanwhile, for systems such as FBMC that only exhibit orthogonality within the real domain, it is not possible to load adjacent subcarriers with complex-valued pilots since the latter must be shielded from interference.

To solve this issue, considering in accordance with the method of figure 2, complex pilots might be assigned to even frequency indices while keeping the neighboring FBMC subcarrier positions vacant or inactive. Therefore, if $P = [\alpha 0(0), \alpha 2(1), ..., \alpha M(M/2)]T \in CM/2 \times 1$ is a vector containing complex-valued elements generated from a ZC sequence, the transmitted pilots $\boldsymbol{AT}$ can be expressed mathematically as follows:

$$A_T = \begin{cases} a_m(k) & \text{Where } 0 \leq k \leq M/2-1 \\ 0 & \text{Otherwise} \end{cases} \qquad (11)$$

Along with

$$a_m(k) = e^{\frac{-j\pi k^2}{M/2}} \quad \text{Where } 0 \leq k \leq M/2-1 \qquad (12)$$

Following the proposed Pilot Symbol scheme, the complex-valued Pilot sequences can still be employed for multicarrier modulation based communication channels such as FBMC/OQAM, along with the Channel Estimation techniques considered for OFDM. However, a sufficient number of guard symbols must be introduced among the training and data symbols to ensure their total isolation, resulting in a data rate loss.

In fact, the required number of FBMC guard symbols depends on the overlapping factor of the considered Prototype filter, which may suggest a long or short prototype filter. In accordance with certain embodiments, a short Prototype filter such as the Near Perfect Reconstruction 1 (NPR1) short Prototype filter may be employed since only 1 FBMC symbol is necessary as a guard interval to perfectly isolate the pilots from the data, leading to a minimal data rate loss as set out in the article by J. Nadal, C. A. Nour, and A. Baghdadi, entitled "Design and Evaluation of a Novel Short Prototype Filter for FBMC/OQAM Modulation," published in IEEE Access, vol. 6, pp. 19610-19625, 2018 (NADAL ET AL). Other Prototype filters can be used, and any short Prototype filter brings the benefit of requiring only one Guard Band symbol. However, the NPR1 is preferable among the others due to its improved performance.

Applying equation (1) to the Pilot Symbol Scheme represented in figure 3 and by adopting the filtering stage in the time domain, the received pilot symbol can be expressed as in equation (7) with the matrix **A** modified as follows:

$$A = \begin{cases} A_{m,l} & \text{If m = 2k, where k} \in Z \\ 0 & \text{Otherwise} \end{cases}$$

where entry $A_{m,l}$ on the even subcarrier indices $m$ and $l^{th}$ row is defined in equation (8).

As mentioned earlier, the noise correlation is generally included in the LS channel due to the lack of complex orthogonality. However, with the Pilot Symbol Scheme in accordance with the embodiment of figure 3 that employs odd subcarriers as Guard Bands, and adopting a short filter, the correlation between noise components can be computed as follows:

$$Cov[\eta_{m,n}, \eta_{m',n'}] = \mathbb{E}[\eta_{m,n}\eta_{m',n'}^*] - \mathbb{E}[\eta_{m,n}]\mathbb{E}[\eta_{m',n'}^*] \qquad (13)$$

$$= \mathbb{E}\left[\left(\Sigma_{k=-\infty}^{\infty} \eta[k]g\left[k - n\frac{M}{2}\right]e^{-\frac{j2\pi mk}{M}}\phi_n(m)\right) \times \left(\Sigma_{k=-\infty}^{\infty} \eta^*[k]g\left[k - n'\frac{M}{2}\right]e^{-\frac{j2\pi m'k}{M}}\phi_{n'}^*(m')\right)\right] = \sigma^2 \Sigma_{k=-\infty}^{\infty} g\left(k - n\frac{M}{2}\right)g\left(k - n'\frac{M}{2}\right) \times$$

$$e^{j2\pi(m'-m)\frac{k}{M}}\phi_n(m)\phi_{n'}^*(m')$$

where $\sigma^2$ is the noise variance.

By making the change of variable $k = k + (M/2)$, the previous equation can be rewritten as follows:

$$Cov[\eta_{m,n}, \eta_{m',n'}] \qquad (14)$$

$$= \sigma^2 \sum_{k=-\infty}^{\infty} g(k)g(k + (n - n')\frac{M}{2})$$

$$\times e^{j2\pi(m'-m)\frac{k}{M}}\phi_n(m)\phi_{n'}^*(m')$$

$$= \sigma^2(i^{p+q}) \sum_{k=0}^{M} g(k)g(k + q\frac{M}{2})e^{j2\pi\frac{kp}{M}}$$

where $p = m - m'$, and $q = n - n'$ with $(p, q) \neq (0, 0)$.

Since the NPR1 PF has a short duration in time, the interference only affects adjacent FBMC symbols. This means that the value of $a$ is limited to -1, or 1. Additionally, the proposed pilot structure includes a Guard Band as the neighboring FBMC symbol, making the correlation between noise components negligible in equation (14) (i.e., Cov [$\eta_{m,}$, $\eta_{m',n}$]≈0). Therefore, the assumption of uncorrelated noise is valid, and a conventional Linear Channel estimator based analysis method as used in OFDM systems for example can be applied to obtain the Channel Estimate without considering the noise correlation matrix (as required in the prior art Time domain approaches discussed above, reducing the complexity.

Hence, equation (9) will reduce to the conventional LS channel estimate as follows:

$$\hat{h} = (A^H A)^{-1} A^H P_r \qquad (15)$$

In fact, the estimated CIR above $\hat{h}$ has most of its power concentrated on a few first samples $L'$, and therefore can be divided into two parts as follows:

$$\widehat{h_{LS}}(n) = \begin{cases} h(n) + \eta(n), & \text{If } 0 \leq n \leq L'\text{-}1 \\ \eta(n), & \text{Otherwise} \end{cases} \qquad (16)$$

Therefore, it is advantageous to de-noise the above channel estimate. De-noising is the process of eliminating noise from a noisy signal. The estimated channel in (15) can be observed to be corrupted by noise. Hence, the CIR can be considered as a noisy signal, and de-noising it can lead to an improved CIR estimation. De-noising can be performed by pruning the CIR coefficients using a threshold. Hence, we apply an $M$ point Inverse Discrete Cosine Transform-Type-IV (IDCT4) on $h_{LS}(n)$. Next, we consider only the first $L'$ taps and pad the rest with zeros. This translates mathematically as follows:

$$\widehat{h_{LS}}(n) = \begin{cases} IDCT4_M h(n) + \eta(n), & \text{If } 0 \leq n \leq L'\text{-}1 \\ 0, & \text{Otherwise} \end{cases} \qquad (17)$$

where $L'$ is the channel delay spread in samples.

Accordingly, the method of figure 2 may comprise an additional optional step of de-noising the estimated channel. It may be noted that conventional channel estimation techniques are not based on channel de-noising. Channel de-noising may be implemented in embodiments to remove the intrinsic interference coming from adjacent users. As a result, the intrinsic interference term will not be included in the channel estimation, significantly reducing the complexity.

In fact, some channel taps included in the first part of the previous equation may be insignificant. Therefore, to accurately select the significant channel taps, we may first estimate the noise power as follows:

$$\hat{\sigma}_\eta^2 = \frac{1}{N - L'} \sum_{n=L'}^{N-1} |\eta(n)|^2 \qquad (18)$$

The significant channel taps may then be selected according to the rule

$$\widehat{h'_{LS}}(n) = \begin{cases} \widehat{h'_{LS}}(n), & \text{If } \beta > \sigma_\eta^2 \\ 0, & \text{Otherwise} \end{cases} \qquad (19)$$

where $\beta(n)$ is the power of $\hat{h}'_{LS}(n)$ at tap index $n$.

The Channel Estimation may then be obtained by taking the Discrete Cosine Transform-type-IV (DCT4) of equation (19) as follows:

$$\widehat{H}_{DCT4}[m] = DCT4_M(\widehat{H_{LS}}'(n)) \qquad (20)$$

where $m = 2k$, along with $0 \leq k \leq M/2$

Note that the above equation gives the channel estimate only for the even subcarrier indices since the odd subcarriers were vacant. Therefore, the channel on the odd subcarriers can be interpolated for example using the method presented in the article by H. Akima, entitled "A new method of interpolation and smooth curve fitting based on local procedures," J. ACM, vol. 17, no. 4, p. 589-602, Oct 1970. [Online]. Available: https://doi.org/10.1145/321607.321609, or other approaches as may occur to the skilled person.

While figure 3 shows alternate sub-carriers as assigned for the transmission of a pilot data structure for the or each user, it will be appreciated that other sequences where no two adjacent sub-carriers are assigned are envisaged-for example every $r^{th}$ sub-band may be assigned, where r is any integer. Still further, the interval between assigned sub bands need not be constant, so long as no two adjacent sub bands are ever assigned.

The number of successive sub-carriers not assigned to transmitting pilot symbols from each user after each sub-carriers assigned to transmitting pilot symbols from each user is determined as a function of the channel fading characteristics of all users, e.g. in view of the Doppler effect (slow or fast fading).

Indeed, the number of successive sub-carriers not assigned to transmitting pilot symbols from each user after each sub-carriers assigned to transmitting pilot symbols from each user for successive transmissions may be adapted over time in response to a detected change in the channel fading characteristics of all users.

The preceding discussion addresses a simple scenario with a single user for all channels. Meanwhile, the method of figure 3 applies equally to multiuser scenarios, as will now be considered.

To ensure the orthogonality for the pilots of multiple users in the uplink, guard symbols are typically required in prior art approaches. However, most of the available solutions in the literature are not efficient in terms of spectral usage as discussed above.

In accordance with embodiments, the frequency resources used for pilot signals of different users are mutually inclusive such that each frequency slot is used by all users.

More particularly, pilot symbols for each user in sequence on each sub-channel are subjected to a subcarrier shift of a predetermined increment with respect to the preceding user in sequence such that pilot symbols from each user on each assigned sub-carrier are interleaved in frequency domain.

Figure 4a illustrates the basic principle of the assignment of pilot symbols to sub-carriers in multi-user environments in accordance with embodiments.

As shown in figure 4a, a set of pilot symbols 401a-e are defined for a first user and a corresponding set of pilot symbols 402a-e are defined for example for a second user. A separation distance defines the predetermined increment between the sub-carrier 411, 412, 413, 414, 415, 416, 417, 418, 419, 420, 421, 422 to which a respective pilot symbol a-e is assigned for respective users.

Here, in the general case, it is shown that there should always be a specified minimum distance between pilots of different users. This distance may not necessarily be uniform for all pilots, although this may be the case in some embodiments such as based on a circular shift as discussed below. However, this separation distance is in all cases at least as large as the delay spread of the channel.

As shown, the following distribution is adopted:

| Pilot symbol | Assigned sub-carrier for user 1 | Assigned sub-carrier for user 1 | Offset (sub-carriers) |
|---|---|---|---|
| a | 411 | 415 | 4 |
| b | 413 | 411 | 2 |
| c | 415 | 419 | 4 |
| d | 417 | 421 | 4 |
| e | 419 | 417 | 2 |
| f | 421 | 413 | 6 |

On this basis, as shown, a minimum separation distance of two is illustrated,

This may be achieved by number of offsetting mechanisms. Possible approaches may include the following: Perform a multiplication operation on each user's set of pilots using a specific sequence. This operation ensures that the resulting set of pilots for each user becomes orthogonal to the sets of pilots belonging to all other users. In simpler terms, this process ensures that the pilot signals used by different users are separated and do not interfere with each other.

Another method includes the development of an interleaving scheme that carefully reorganizes the position of pilot signals from different users. This process preferably guarantees that the time-frequency resources allocated for pilot signals of different users are mutually inclusive. In other words, elements like '401e' from the second user may be situated on the same frequency subcarrier as elements like '401d' from the first user as exemplified in Figure 4a. However, the preferred condition is to consistently uphold a minimum separation distance, equivalent to the delay spread of the channel, between corresponding elements of different users, such as between '402e' and '401e'

in accordance with a preferred embodiment the pilot signal of a user u is a circular shift of the $u + 1$ pilot signal. This translates mathematically as follows:

$$A_{T_u} = \begin{cases} a_{m,n}^u(k) & \text{If } m > M/2 \\ 0, & \text{Otherwise} \end{cases} \qquad (21)$$

Along with

$$a_{m,n}^{u+1}(k) = a_{i,n}^u(k)$$

$$i = (mod_{L_{ZC}}(m + \frac{L_{ZC}}{U})) \qquad (22)$$

Such that

$$\frac{L_{ZC}}{U} \leq DS \tag{22}$$

where mod is the modulo operator, $L_{ZC} = M/2$ is the Constant Amplitude Zero Auto-Correlation sequence length, and $DS$ is the average delay spread of all users.

The absence of guard symbols between user pilots leads to intrinsic inter-user interference. The presence of this latter translates into an inter-user dependency of the information used for computing the channel estimation. As a result, intrinsic interference from a user $u2$ to another user $u1$ denoted by $\zeta_{u_2}^{u_1}$ must be considered for Channel Estimation.

Therefore, with $U$ being the total number of users, the demodulated pilot signal on subcarrier $m$, time index $n$ can be mathematically expressed as

$$
\begin{aligned}
P_{m,n} = \sum_{u=1}^{U} \sum_{l=0}^{L_u-1} \sum_{k=-\infty}^{\infty} \sum_{m'=0}^{M-1} \sum_{n'=-\infty}^{\infty} a_{m'n'}^{u} g(k - l - n'\frac{M}{2}) \\
\times g\left(k - n\frac{M}{n}\right) e^{j2\pi(m'-m)k/M} e^{-\frac{j2\pi m'l}{M}} h_u(l) + \eta_{m,n}
\end{aligned} \tag{23}
$$

Where $h_u(l)$ is the $u^{th}$ user CIR of length $L_u$.

To ease notation, the above equation can be expressed in a vector form as follows:

$$\bar{P} = \overline{Ah} + \bar{\eta} \tag{24}$$

Where

$$\bar{h} = [h_1, \dots h_U]$$

$$h_U = [h_u(0), \dots h_u(L_u - 1)]$$

$$\bar{P} = [P_{r_1}, \dots P_{r_U}]$$

$$P_{r_U} = [p_0^u, 0, p_2^u, 0, \dots p_{M/_2-2}^u, 0]$$

$$\bar{\eta} = [\eta_0, \dots \eta_u]$$

And

$$\bar{A} = \begin{matrix} A_1 & \zeta_1^2 & \dots & \zeta_1^U \\ \zeta_2^1 & A_2 & \dots & \zeta_2^U \\ \vdots & \vdots & \ddots & \vdots \\ \zeta_U^1 & \zeta_U^2 & \dots & A_U \end{matrix} \tag{25}$$

where $A_u$ is a (M/2)$\times$ $Lu$ matrix with its $mth$ row and $lth$ column defined as

$$A_u(m,l) = \sum_{k=-\infty}^{\infty} \sum_{m'=0}^{M-1} \sum_{n'=-\infty}^{\infty} a^u_{m'n'} \, g\left[k - l - n'\frac{M}{2}\right] \times g[k - n\frac{M}{2}] \\ \times e^{j2\pi(m'-m)k/M} e^{j\pi(m'+n'-m-n)/2} e^{-j2\pi m'l/M} \tag{25}$$

Along with $\zeta^j_{j'}$, is an (M/2)×$L_{j'}$ matrix with its $m^{th}$ row and $l^{th}$ column defined as

$$\zeta^j_{j'} = \sum_{k=-\infty}^{\infty} \sum_{m'=0}^{M-1} \sum_{n'=-\infty}^{\infty} a^{uj'}_{m'n'} \, g\left[k - l - n'\frac{M}{2}\right] \times g[k - n\frac{M}{2}] \\ \times e^{j2\pi(m'-m)k/M} e^{j\pi(m'+n'-m-n)/2} e^{-j2\pi m'l/M} \tag{26}$$

$$=A_j(mod_{L_{ZC}}(m + \frac{L_{ZC}}{U}, l)$$

Using equation (15), and neglecting noise correlation as previously discussed, the LS Channel estimation can be obtained as

$$\hat{h} = \overline{(A^H A)}^{-1} \overline{(A^H P)} \tag{27}$$

Where $\hat{h} = [\widehat{h_1}, ..., \widehat{h_U}]$.

In fact, the proposed Pilot Symbol Scheme for a Multi User scenario shifts the intrinsic interference caused by user pilots to the noise part. In other words, the estimated channel in equation (27) can be divided into two parts: the CIR part and the noise plus intrinsic interference part. Under the light of this definition, equation (16) is modified as follows:

$$\widehat{h_{j_{LS}}}(n) = \begin{cases} \widehat{h_j(n)} + \eta_j(n), & \text{If } 0 \le n \le L' - 1 \\ \sum_{j'} \zeta^j_{j'}\widehat{h^{j'}_j} + \eta_j(n), & \text{Otherwise} \end{cases} \tag{28}$$

Next, by adopting equation (17) for de-noising the estimated impulse response for the *ith* user, the second part can be neglected, which modifies equation (19) to

$$\hat{\sigma}^2_\eta = \frac{1}{i - L'} \sum_{n=L'}^{i-1} |\eta(n)|^2 \tag{29}$$

where i is the circular shift applied for the *j th* user defined in (22).

Hence, the intrinsic interference in MU CE can be ignored and therefore, equation (25) reduces to a diagonal matrix as follows:

$$\bar{A} = \begin{matrix} A_1 & 0 & ... & 0 \\ 0 & A_2 & ... & 0 \\ \vdots & \vdots & \ddots & \vdots \\ 0 & 0 & ... & A_U \end{matrix} \tag{30}$$

As a result, the CE for MU reduces to a SU one, where the channel estimate of the $u^{th}$ user can be computed by adopting equations (17) (19) and (20).

Figure 4b presents schematically the basis for Time Domain channel estimation for FBMC in a multi user scenario in accordance with an embodiment.

As stated above, at step 210 a plurality of sub-carriers are assigned for the transmission of pilot symbols for each user, where no two adjacent sub-carriers are so assigned.

In view of the foregoing discussion, the method of figure 2 may be adapted for a multi user scenario by subjecting the pilot symbols for each user in sequence on each sub-channel are subjected to a circular shift of a predetermined increment with respect to the preceding user in sequence such that pilot symbols from each user on each assigned sub-carrier are interleaved in both time and frequency domains.

This is illustrated in figure 4 which may be compared to the single user scenario of figure 3.

As set out above, the predetermined increment ($i$) may be equal to $i = \left(\mathrm{mod}_{L_{ZC}}\left(m + \dfrac{L_{ZC}}{U}\right)\right)$ Where L is the sequence length, and U is the number of users, and m is the index of the respective sub-carrier.

As is made clear in the preceding discussion, the proposed pilot structure eliminates the need for guard bands between users' pilots. This is advantageous is comparison to the majority of pilot structures in the literature for FBMC/OQAM usually use guard bands to prevent interference from neighboring users, or alternatively, if they don't insert guard bands between users' pilots, they incorporate the intrinsic interference term into the channel estimation technique, leading to increased complexity compared to OFDM.

In contrast to existing pilot structures, embodiments allow for the use of conventional OFDM channel estimation techniques without requiring the inclusion of the intrinsic interference term.

It may be noted that the method of figure 2 presents a method from the perspective of the system as a whole. The method may equally be considered from the point of view of a user device.

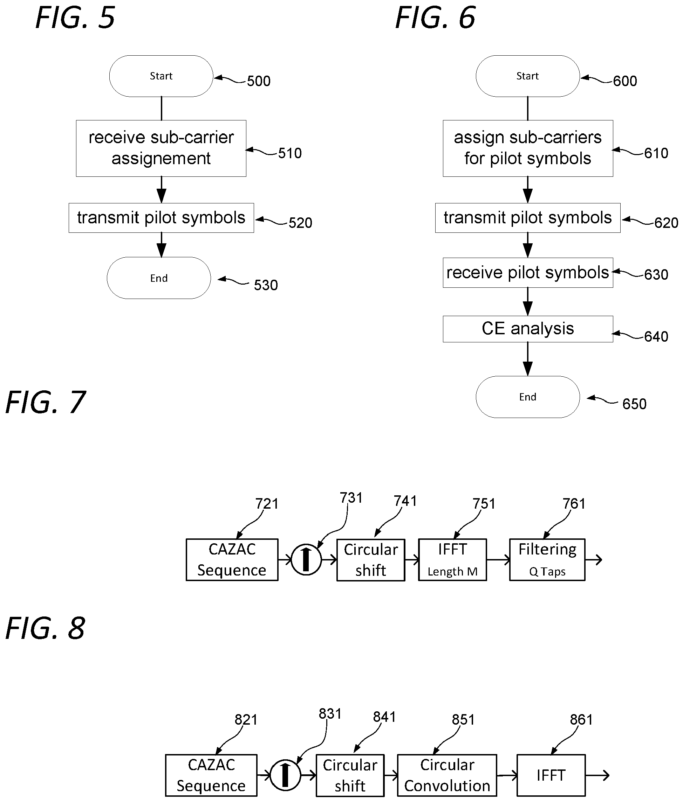

Figure 5 presents a method in accordance with an embodiment, as executed at a user device.

In particular, figure 5 shows a method of supporting channel characteristic estimation at a user device for a user in a multicarrier modulation based communication channel offering a plurality of sub-carriers.

As shown, the method starts at step 500, before proceeding to step 510 at which a carrier assignment assigning a plurality of sub-carriers for the transmission of a pilot data structure for the user, where no two adjacent sub-carriers are so assigned is received. The method then proceeds to step 520 at which pilot symbols are transmitted on each assigned sub-carrier, for a frequency domain based analysis of the communication channel on the basis of the received pilot symbols. The method then terminates at step 530. The method may be adapted mutatis mutandis to incorporate any of the variants described with respect to figures 2 to 4.

It may be noted that the method of figure 2 presents a method from the perspective of the system as a whole. The method may equally be considered from the point of view of a base station.

Figure 6 presents a method in accordance with an embodiment, as executed at a base station.

In particular, figure 6 shows a method of supporting channel characteristic estimation at a user device for a user in a multicarrier modulation based communication channel offering a plurality of sub-carriers.

As shown, the method starts at step 600 before proceeding to step 610 of assigning a plurality of the sub-carriers for the transmission of a pilot data structure for each user, where no two adjacent sub-carriers are so assigned. The method then proceeds to transmit the carrier assignments to each user at step 620. At step 630 the base station receives pilot symbols from each user on the assigned sub-carriers, and at step 640 performs a frequency domain based analysis of the communication channel on the basis of the received pilot symbols before terminating at step 650. The method may be adapted mutatis mutandis to incorporate any of the variants described with respect to figures 2 to 4.

While embodiments have been described in terms of a method, embodiments also take the form of a hardware implementation. By way of example, embodiments based on the two standard FBMC hardware architectures are presented in the following figures.

Figure 7 shows a first exemplary transmitter implementation in accordance with embodiments.

As shown, the implementation of figure 7 comprises one processing channel which comprises in sequence an Inverse Fast Fourier Transform (IFFT) unit 751, and a filtering stage 761.

During the transmission of Pilot Signals, the values indicated by the chosen constant amplitude zero autocorrelation sequence are provided from memory 721.

In addition to these conventional components, the processing channel comprises an up-sampling module 731, which upscale each signal by a factor of q, receiving values from the up-sampling module 731, the outputs of which are then processed by the circular shift module 741, in line with the foregoing discussion.

The output of two Inverse Fast Fourier Transform (IFFT) block 751 process the sub-carriers in accordance with the equation:

$$u_n(k) = \sum_{m=0}^{M-1} a_n(m)\, e^{j\frac{2\pi}{M}km} \qquad\qquad (31)$$

Where $a_n(m)$ is the complex CAZAC sequence element at subcarrier index m and time slot n, and M is the total number of available sub-carriers.

The filtering stage 761, corresponds to a filtering operation carried out on the pilot symbols. Specifically, the filtering operation is described as follows:

$$s_n(k) = \sum_{l=0}^{K-1} g(k + lM)\, u_n(k + lM) \qquad (32)$$

Where $g(k)$ is the impulse response of the prototype filter with overlapping factor K and length KM.

The filtering operation 761 can be seen as a digital filter, whose design represents important trade-offs between performance and system complexity.

When using a short filter with an Overlapping Factor of 1 for the filtering stage, this latter can be seen as a windowing operation: the outputs of the IFFT are simply multiplied by the prototype filter impulse response. Consequently, the hardware complexity overhead introduced by the filtering stage is limited.

Figure 8 shows a second exemplary transmitter implementation in accordance with embodiments.

As shown, the implementation of figure 8 comprises in sequence a Finite Impulse Response (FIR) filter 851, and an Inverse Fast Fourier Transform block 861.

During the transmission of Pilot Signals, the values indicated by the chosen constant amplitude zero autocorrelation sequence are provided from memory 821.

In addition to these conventional components, the processing channel comprises an up-sampling module 831, which upscales each signal by a factor of q, receiving values from the respective up-sampling module 831, the outputs of which are then processed by respective circular shift modules 841, in line with the foregoing discussion.

The original concept of this design is to shift the filtering stage into the frequency domain. The hardware complexity is supposed to be higher than the complexity of the first implementation, at least for long filters. In fact, it requires one IFFT of size L = KM. However, in the case of a short filter (K = 1), the size of the IFFT is the same as for the first implementation.

Corresponding arrangements may be provided at the receiver side.

Accordingly, there may be provided a linear modulation based communications system based for example of the implementations of figure 7 or 8 adapted to performing channel characteristic estimation for one or more users in a multicarrier modulation based communication channel offering a plurality of sub-carriers, adapted to assign a plurality of sub-carriers for the transmission of pilot data symbols for each user, where no two adjacent sub-carriers are so assigned, transmitting pilot symbols from each user on each assigned sub-carrier, to receive the pilot symbols on each assigned sub-carrier, and to perform a frequency domain based analysis of the communication channel on the basis of the received pilot symbols.

Similarly, there may be provided a user device based for example of the implementations of figure 7 or 8 supporting channel characteristic estimation in a multicarrier modulation based communication system offering a plurality of sub-carriers, the user device adapted to receive a carrier assignment assigning a plurality of sub-carriers for the transmission of pilot symbols, where no two adjacent sub-carriers are so assigned, transmitting pilot symbols on each assigned sub-carrier, for a frequency domain based analysis of the communication channel on the basis of the received pilot symbols.

Still further, there may be provided a base station based for example of the implementations of figure 7 or 8 for performing channel characteristic estimation for one or more users in a multicarrier modulation based communication system offering a plurality of sub-carriers, the base station adapted to assigning a plurality of sub-carriers for the transmission of pilot symbols, where no two adjacent sub-carriers are so assigned, to transmit the carrier assignments to each user, to receive pilot symbols from each user on each assigned sub-carrier on each assigned sub-carrier, and to perform a frequency domain based analysis of the communication channel on the basis of the received pilot symbols.

As such there is provided a Channel Estimation mechanism in an FBMC or other multicarrier modulation based communication channel offering a plurality of sub-carriers, comprises transmitting pilot symbols based on the Zadoff Chu or other Constant Amplitude Zero Auto-Correlation sequence on non-adjacent (for example alternating) sub-channels. In multi-user scenarios, pilot symbols from each user device are transmitted on the same selected sub-channels, but subjected to a circular shift. These mechanisms obviating the need for Guard bands between each user devices pilot symbols, and the need for the including of a noise correlation matrix.

The disclosed methods can take form of an entirely hardware embodiment (e.g. FPGA), an entirely software embodiment (for example to control a system according to the invention) or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

These methods and processes may be implemented by means of computer-application programs or services, an application-programming interface (API), a library, and/or other computer-program product, or any combination of such entities.

The inventive method can be performed by a suitably-programmed general-purpose computer or computer system, possibly including a computer network, storing a suitable program in non-volatile form on a computer-readable medium such as a hard disk, a solid state disk or a CD-ROM and executing the program using its microprocessor(s) and memory.

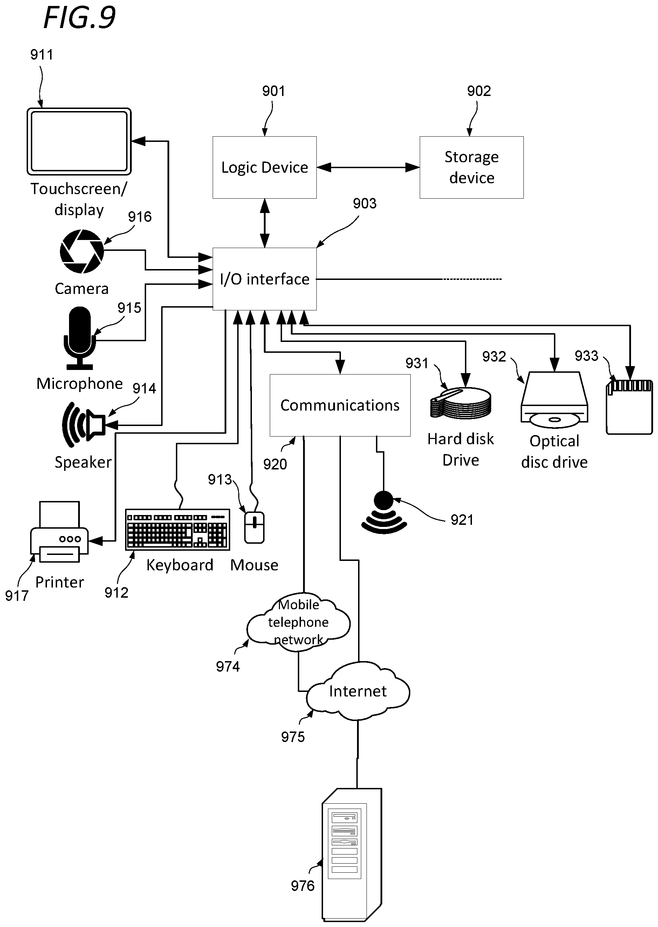

Figure 9 presents a computer suitable for carrying out a method according to an embodiment.

In figure 9, the computer includes a Central Processing Unit (CPU) 901 which may perform the method steps described above while running an executable program, i.e. a set of computer-readable instructions, stored in a memory device such as RAM 902a or ROM 902b or hard disk drive 931, DVD/CD drive 932, or stored remotely. Moreover, one or more computer files defining the spatial relations graphs, and computer files comprising the virtual space and objects defined therein, may also be stored on one or more of memory devices 902a, 902b, 931, 932, or remotely.

The claimed invention is not limited by the form of the computer-readable media on which the computer-readable instructions of the inventive process are stored. For example, the instructions and files can be stored on CDs, DVDs, in FLASH memory, RAM, ROM, PROM, EPROM, EEPROM, hard disk or any other information processing device with which the computer communicates, such as a server or computer. The program can be stored on a same memory device or on different memory devices.

Further, a computer program suitable for carrying out the inventive method can be provided as a utility application, background daemon, or component of an operating system, or combination thereof, executing in conjunction with CPU 901 and an operating system such as Microsoft XP, Microsoft Windows 10, UNIX, Solaris, LINUX, Apple MAC-OS and other systems known to those skilled in the art.

CPU 901 can be a Xenon processor from Intel of America or a Ryzen processor from AMD of America, or can be other processor types, such as a Freescale ColdFire, IMX, or ARM processor from NXP Semiconductors. Alternatively, the CPU can be a processor such as a Core from Intel Corporation of America, or can be implemented on an FPGA, ASIC, PLD or using discrete logic circuits, as one of ordinary skill in the art would recognize. Further, the CPU can be implemented as multiple processors cooperatively working to perform the computer-readable instructions of the inventive processes described above.

The computer may include a network interface 920, such as an Intel Ethernet PRO network interface card from Intel Corporation of America, for interfacing with a network, such as a local area network (LAN) 974, wide area network (WAN), the Internet 975 and the like. The method may be implemented remotely, by means of a web application, e.g. operating on remote server 776.

The computer may further include a display controller 910, such as a NVIDIA GeForce RTX graphics adaptor from NVIDIA Corporation of America for interfacing with display 911. A general purpose I/O interface 903 interfaces with a keyboard 912 and pointing device 913, such as a roller ball, mouse, touchpad and the like. The display, the keyboard, the sensitive surface for the touch mode and the pointing device, together with the display controller and the I/O interfaces, form a graphical user interface, used by the user to provide input commands. Commands may additionally be issued via a network connection as described below.

Disk controller 930 connects HDD 931 and DVD/CD 932 with communication bus 920, which can be an ISA, EISA, VESA, PCI, or similar, for interconnecting all of the components of the computer.

A description of the general features and functionality of the display, keyboard, pointing device, as well as the display controller, disk controller, network interface and I/O interface is omitted herein for brevity as these features are known.

The system of figure 9 may implement the operations ascribed to the base station, or any user device. As such, multiple such systems may be provided operating in coordination to execute respective parts of the methods and operations described.

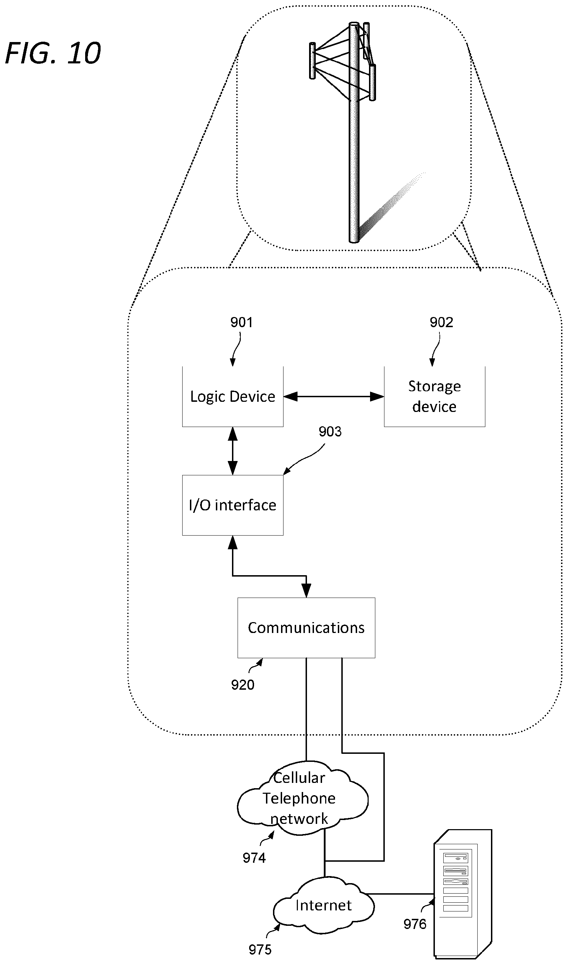

By way of example, Figure 10 presents a base station 910 incorporating computer suitable for carrying out a method according to an embodiment.

As shown in figure 10, a computer 900 comprises a subset of the components described with respect to figure 9 as appropriate to such an implementation context. Specifically, the computer includes a Central Processing Unit (CPU) 901 which may perform the method steps described above while running an executable program, i.e. a set of computer-readable instructions, stored in a memory device 902, in communication with I/O interface 903.

The computer may include a network interface 920, for interfacing with a network, such as a local area network (LAN) 974, wide area network (WAN), the Internet 975 and the like. Operations of the method may be implemented remotely, by means of a web application, e.g. operating on remote server 976.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The examples described above are given as non-limitative illustrations of embodiments of the invention. They do not in any way limit the scope of the invention which is defined by the following claims.

**Claims**

1. A method of performing channel characteristic estimation for one or more users in a multicarrier modulation based communication channel offering a plurality of sub-carriers, said method comprising assigning a plurality of said sub-carriers for the transmission of complex pilot symbols for each said user, where no two adjacent said sub-carriers are so assigned, transmitting said complex pilot symbols from each said user on each said assigned sub-carrier, receiving said pilot symbols on each said assigned sub-carrier, and performing a frequency domain based analysis of said communication channel on the basis of said received pilot symbols to obtain an estimated channel.

2. The method of claim 1 wherein said frequency domain based analysis of said communication channel on the basis of said received pilot symbols comprises a Linear Channel estimator based analysis.

3. The method of any preceding claim wherein said pilot symbols reflect a Constant Amplitude Zero Auto-Correlation sequence.

4. The method any preceding claim wherein the said pilot symbols for each said user in sequence on each said sub-channel are subjected to a circular shift of a predetermined increment with respect to the preceding said user in said sequence such that pilot symbols from each said user on each said assigned sub-carrier are interleaved in both time and frequency domains.

5. The method of claim 4 where said predetermined increment ($i$) is at least equal to

$$ i = (\mathrm{mod}_{L_{ZC}}(m + \frac{L_{ZC}}{U})) $$

Where L is the sequence length, and U is the number of users, and m is the index of the respective sub-carrier.

6. The method of any preceding claim wherein the number of successive sub-carriers not assigned to transmitting pilot symbols from each said user after each sub-carriers assigned to transmitting pilot symbols from each said user is determined as a function of the channel fading characteristics of all users.

7. The method of any preceding claim comprising a further step of filtering said pilot symbols by a prototype filter with an overlapping factor of one.

8. A method of supporting channel characteristic estimation at a user device for a user in a multicarrier modulation based communication channel offering a plurality of sub-carriers, said method comprising receiving a carrier assignment assigning a plurality of said sub-carriers for the transmission of a pilot data structure for said user, where no two adjacent said sub-carriers are so assigned, transmitting pilot symbols on each said assigned sub-carrier, for a frequency domain based analysis of said communication channel on the basis of said received pilot symbols.

9. A method of performing channel characteristic estimation at a base station for one or more users in a multicarrier modulation based communication channel offering a plurality of sub-carriers, said method comprising assigning a plurality of said sub-carriers for the transmission of a pilot data structure for each said user, where no two adjacent said sub-carriers are so assigned, transmitting said carrier assignments to each said user, receiving pilot symbols from each said user on each said assigned sub-carrier on each said assigned sub-carrier, and performing a frequency domain based analysis of said communication channel on the basis of said received pilot symbols.

10. A linear modulation based communications system adapted to performing channel characteristic estimation for one or more users in a multicarrier modulation based communication channel offering a plurality of sub-carriers, said system being adapted to assign a plurality of said sub-carriers for the transmission of pilot data symbols for each said user, where no two adjacent said sub-carriers are so assigned, transmitting pilot symbols from each said user on each said assigned sub-carrier, to receive said pilot symbols on each said assigned sub-carrier, and to perform a frequency domain based analysis of said communication channel on the basis of said received pilot symbols.

11. A user device supporting channel characteristic estimation in a multicarrier modulation based communication system offering a plurality of sub-carriers, said user device adapted to receive a carrier assignment assigning a plurality of sub-carriers for the transmission of pilot symbols, where no two adjacent said sub-carriers are so assigned, transmitting pilot symbols on each said assigned sub-carrier, for a frequency domain based analysis of said communication channel on the basis of said received pilot symbols.

12. A base station for performing channel characteristic estimation for one or more users in a multicarrier modulation based communication system offering a plurality of sub-carriers, said base station adapted to assigning a plurality of said sub-carriers for the transmission of pilot symbols, where no two adjacent said sub-carriers are so assigned, to transmit said carrier assignments to each said user, to receive pilot symbols from each said user on each said assigned sub-carrier on each said assigned sub-carrier, and to perform a frequency domain based analysis of said communication channel on the basis of said received pilot symbols.

13. The system of any of claims 10 to 12 wherein the prototype filter of said transmitter or said receiver has an overlapping factor of one.

14. A computer program comprising instructions which, when the program is executed by a computer, cause the computer to carry out the method of any of claims 1 to 9.

15. A computer-readable [storage] medium comprising instructions which, when executed by a computer, cause the computer to carry out the method of any of claims 1 to 10.

## FIG. 1

Time

Frequency

110    120    130

## FIG. 2

Start — 200

assign sub-carriers
for pilot symbols — 210

transmit pilot symbols — 220

receive pilot symbols — 230

CE analysis — 240

End — 250

FIG. 3

FIG. 4a

FIG. 4b

## FIG. 5

```
     ┌─────────┐
     │  Start  │ ◄──── 500
     └─────────┘
          │
          ▼
┌──────────────────┐
│ receive sub-carrier │ ◄──── 510
│    assignement      │
└──────────────────┘
          │
          ▼
┌──────────────────┐
│ transmit pilot symbols │ ◄──── 520
└──────────────────┘
          │
          ▼
     ┌─────────┐
     │   End   │ ◄──── 530
     └─────────┘
```

## FIG. 6

```
     ┌─────────┐
     │  Start  │ ◄──── 600
     └─────────┘
          │
          ▼
┌──────────────────┐
│  assign sub-carriers │ ◄──── 610
│   for pilot symbols  │
└──────────────────┘
          │
          ▼
┌──────────────────┐
│ transmit pilot symbols │ ◄──── 620
└──────────────────┘
          │
          ▼
┌──────────────────┐
│ receive pilot symbols │ ◄──── 630
└──────────────────┘
          │
          ▼
┌──────────────────┐
│   CE analysis    │ ◄──── 640
└──────────────────┘
          │
          ▼
     ┌─────────┐
     │   End   │ ◄──── 650
     └─────────┘
```

## FIG. 7

```
   721        731    741         751          761
    │          │      │           │            │
    ▼          ▼      ▼           ▼            ▼
┌─────────┐   (I)  ┌─────────┐ ┌─────────┐ ┌─────────┐
│ CAZAC   │──►○──► │ Circular│►│  IFFT   │►│Filtering│──►
│Sequence │        │  shift  │ │Length M │ │ Q Taps  │
└─────────┘        └─────────┘ └─────────┘ └─────────┘
```

## FIG. 8

```
   821        831    841          851           861
    │          │      │            │             │
    ▼          ▼      ▼            ▼             ▼
┌─────────┐   (I)  ┌─────────┐ ┌───────────┐ ┌─────┐
│ CAZAC   │──►○──► │ Circular│►│  Circular │►│IFFT │──►
│Sequence │        │  shift  │ │Convolution│ │     │
└─────────┘        └─────────┘ └───────────┘ └─────┘
```

# FIG.9

911

901

902

Logic Device

Storage device

Touchscreen/ display

916

903

Camera

I/O interface

915

Microphone

914

Speaker

931

932

933

Communications

920

Hard disk Drive

Optical disc drive

921

Printer

Keyboard

Mouse

913

917

912

Mobile telephone network

974

Internet

975

976

*FIG. 10*

# EUROPEAN SEARCH REPORT

Application Number

EP 23 30 6729

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOSSEINY HAMED ET AL: "Spectrally Efficient Pilot Structure and Channel Estimation for Multiuser FBMC Systems", ICC 2020 – 2020 IEEE INTERNATIONAL CONFERENCE ON COMMUNICATIONS (ICC), IEEE, 7 June 2020 (2020-06-07), pages 1-7, XP033797864, DOI: 10.1109/ICC40277.2020.9148851 [retrieved on 2020-07-24] | 1,2, 8-12,14, 15 | INV. H04B7/0452 H04L5/00 H04L25/02 |
| Y | * figure 1 * <br> * title * <br> * section III, section IV * | 3-7,13 | |
| X | ZHU ZHIYUAN ET AL: "Decision Feedback CIR and CFO Estimation Algorithm for FBMC/OQAM System", 2019 IEEE INTERNATIONAL SYMPOSIUM ON BROADBAND MULTIMEDIA SYSTEMS AND BROADCASTING (BMSB), IEEE, 5 June 2019 (2019-06-05), pages 1-5, XP033697668, DOI: 10.1109/BMSB47279.2019.8971865 [retrieved on 2020-01-27] | 1,2, 8-12,14, 15 | |
| Y | * abstract * <br> * figure 2 * <br> * section IV * | 3-7,13 | TECHNICAL FIELDS SEARCHED (IPC) <br><br> H04B <br> H04L |
| Y | US 2017/310525 A1 (LIN HAO [FR]) 26 October 2017 (2017-10-26) * paragraphs [0052] – [0060] * | 3-5 | |
| Y | US 10 116 478 B2 (BLACKBERRY LTD [CA]) 30 October 2018 (2018-10-30) * column 2, lines 36-48 * | 6 | |

-/--

The present search report has been drawn up for all claims

| Place of search | Date of completion of the search | Examiner |
|---|---|---|
| Munich | 27 February 2024 | Vucic, Jelena |

EPO FORM 1503 03.82 (P04C01)

**page 1 of 2**

Europäisches
Patentamt

European
Patent Office

Office européen
des brevets

# EUROPEAN SEARCH REPORT

Application Number

EP 23 30 6729

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NADAL JEREMY ET AL: "Design and Evaluation of a Novel Short Prototype Filter for FBMC/OQAM Modulation", IEEE ACCESS, 25 April 2018 (2018-04-25), pages 19610-19625, XP093135480, USA ISSN: 2169-3536, DOI: 10.1109/ACCESS.2018.2818883 Retrieved from the Internet: URL:https://ieeexplore.ieee.org/ielx7/6287 639/8274985/08323364.pdf?tp=&arnumber=8323 364&isnumber=8274985&ref=aHR0cHM6Ly9pZWVle HBsb3JlLmllZWUub3JnL2Fic3RyYWN0L2RvY3VtZW5 0LzgzMjMzNjQ= [retrieved on 2024-02-27] * section III * ----- | 7,13 | |

TECHNICAL FIELDS SEARCHED (IPC)

The present search report has been drawn up for all claims

| Place of search | Date of completion of the search | Examiner |
|---|---|---|
| Munich | 27 February 2024 | Vucic, Jelena |

EPO FORM 1503 03.82 (P04C01)

page 2 of 2

## ANNEX TO THE EUROPEAN SEARCH REPORT
## ON EUROPEAN PATENT APPLICATION NO.

EP 23 30 6729

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2024

| Patent document cited in search report | | Publication date | Patent family member(s) | | Publication date |
|---|---|---|---|---|---|
| US 2017310525 | A1 | 26-10-2017 | EP | 3202077 A1 | 09-08-2017 |
| | | | FR | 3026907 A1 | 08-04-2016 |
| | | | US | 2017310525 A1 | 26-10-2017 |
| | | | WO | 2016051062 A1 | 07-04-2016 |
| US 10116478 | B2 | 30-10-2018 | CN | 1605172 A | 06-04-2005 |
| | | | CN | 101188597 A | 28-05-2008 |
| | | | EP | 1442549 A1 | 04-08-2004 |
| | | | EP | 2320594 A2 | 11-05-2011 |
| | | | EP | 2755349 A1 | 16-07-2014 |
| | | | EP | 3065332 A1 | 07-09-2016 |
| | | | HK | 1199570 A1 | 03-07-2015 |
| | | | KR | 20040045859 A | 02-06-2004 |
| | | | US | 2003072254 A1 | 17-04-2003 |
| | | | US | 2007053282 A1 | 08-03-2007 |
| | | | US | 2007253324 A1 | 01-11-2007 |
| | | | US | 2009225891 A1 | 10-09-2009 |
| | | | US | 2010271930 A1 | 28-10-2010 |
| | | | US | 2011216808 A1 | 08-09-2011 |
| | | | US | 2012307930 A1 | 06-12-2012 |
| | | | US | 2013010808 A1 | 10-01-2013 |
| | | | US | 2013010887 A1 | 10-01-2013 |
| | | | US | 2013016693 A1 | 17-01-2013 |
| | | | US | 2013223553 A1 | 29-08-2013 |
| | | | US | 2014314183 A1 | 23-10-2014 |
| | | | US | 2015085820 A1 | 26-03-2015 |
| | | | US | 2015180630 A1 | 25-06-2015 |
| | | | US | 2016036611 A1 | 04-02-2016 |
| | | | US | 2016226691 A1 | 04-08-2016 |
| | | | US | 2018062896 A1 | 01-03-2018 |
| | | | US | 2019123949 A1 | 25-04-2019 |
| | | | WO | 03034644 A1 | 24-04-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. LELE** ; **P. SIOHAN** ; **R. LEGOUABLE** ; **J.-P. JAVAUDIN**. Preamble-based channel estimation techniques for OFDM/OQAM over the powerline. *2007 IEEE International Symposium on Power Line Communications and Its Applications*, 2007, 59-64
- **D. KONG** ; **D. QU** ; **T. JIANG**. Time domain channel estimation for OQAM-OFDM systems: Algorithms and performance bounds. *IEEE Transactions on Signal Processing*, 2014, vol. 62 (2), 322-330
- **P. SINGH** ; **K. VASUDEVAN**. Time domain channel estimation for MIMO-FBMC/OQAM systems. *Wireless Personal Communications*, 2019, vol. 108 (10)
- **M. CAUS** ; **A. I. PEREZ-NEIRA**. Transmitter-receiver designs for highly frequency selective channels in MIMO FBMC systems. *IEEE Transactions on Signal Processing*, 2012, vol. 60 (12), 6519-6532
- Novel preamble-based channel estimation for OFDM/OQAM systems. **J. DU** ; **S. SIGNELL**. 2009 IEEE international conference on communications.. IEEE, 2009, 1-6
- 2dB better than CP-OFDM with OFDM/OQAM for preamble-based channel estimation. **C. LELE** ; **P. SIOHAN** ; **R. LEGOUABLE**. 2008 IEEE International Conference on Communications.. IEEE, 2008, 1302-1306
- **C. LÉLÉ** ; **J.-P. JAVAUDIN** ; **R. LEGOUABLE** ; **A. SKRZYPCZAK** ; **P. SIOHAN**. Channel estimation methods for preamble-based OFDM/OQAM modulations. *European Transactions on Telecommunications*, 2008, vol. 19 (7), 741-750

- **E. KOFIDIS** ; **D. KATSELIS** ; **A. RONTOGIANNIS** ; **S. THEODORIDIS**. Preamble-based channel estimation in OFDM/OQAM systems: A review. *Signal processing*, 2013, vol. 93 (7), 2038-2054
- **A. S. AHMED** ; **M. M. HAMDI** ; **M. S. ABOOD** ; **A. M. KHALEEL** ; **M. FATHY** ; **S. H. KHALEEFAH**. Channel estimation using LS and MMSE channel estimation techniques for MIMO-OFDM systems. *2022 International Congress on Human-Computer Interaction, Optimization and Robotic Applications (HORA)*, 2022, 1-6
- **H. HOSSEINY** ; **A. FARHANG** ; **B. FARHANG-BOROUJENY**. Spectrally efficient pilot structure and channel estimation for multiuser FBMC systems. *ICC 2020 - 2020 IEEE International Conference on Communications (ICC)*, 2020, 1-7
- **D. CHU**. Polyphase codes with good periodic correlation properties (corresp.). *IEEE Transactions on Information Theory*, 1972, vol. 18 (4), 531-532
- **J. NADAL** ; **C. A. NOUR** ; **A. BAGHDADI**. Design and Evaluation of a Novel Short Prototype Filter for FBMC/OQAM Modulation. *IEEE Access*, 2018, vol. 6, 19 610-19 625
- **H. AKIMA**. A new method of interpolation and smooth curve fitting based on local procedures. *J. ACM*, October 1970, vol. 17 (4), 589-602, https://doi.org/10.1145/321607.321609